# DEMANDE DE BREVET EUROPEEN

(11) **EP 0 978 959 A1**
(43) Date de publication de la demande: **09.02.2000**
(21) Numéro de dépôt: 99440079.4
(22) Date de dépôt: 20.04.1999
(51) Int. Cl.: H04B 7/26

(54) **Procédé de gestion destiné à permettre la réception d'informations de signalisation au niveau d'un terminal radio communiquant en mode TDMA avec une station fixe**

(30) Priorité: 20.04.1998 FR 9804931
(71) Demandeur: ALCATEL, 75008 Paris (FR)
(72) Inventeur: Desblancs, Philippe, 75015 Paris (FR); Rubon, Jean-François, 75018 Paris (FR); Criqui, Jean-François, 92600 Asnieres (FR)
(74) Mandataire: Scheer, Luc

(57) **Abrégé**

L'invention concerne un procédé de gestion destiné à permettre la réception d'informations de signalisation au niveau d'un terminal radio communiquant en mode TDMA avec une station fixe. Les informations de signalisation sont transmises par des stations fixes dans des intervalles de temps d'une trame de signalisation suivant et/ou précédant des trames de trafic et les stations fixes sont synchronisées entre-elles.

Selon l'invention, le procédé consiste à changer la position des informations de signalisation par rapport à celle des données de trafic, émises ou recues par le terminal, de manière à ce que le terminal puisse émettre ou recevoir les données de trafic tout en recevant dans une durée prédéterminée toutes les informations de signalisation transmises par les stations fixes.

## Description

Le domaine de l'invention est celui de la transmission de données numériques entre un terminal, éventuellement mobile, et des stations fixes faisant partie d'un réseau de communication cellulaire. Plus précisément, la présente invention concerne un procédé permettant à un terminal communiquant en mode TDMA avec une station fixe de recevoir des informations de signalisation de cette station fixe et également des autres stations fixes du réseau cellulaire.

On se placera dans la suite de cette description dans le cadre d'un terminal apte à communiquer avec des stations fixes formant un petit réseau cellulaire privé. Les stations fixes sont par exemple réparties dans des bureaux d'un immeuble, reliées au réseau public par l'intermédiaire d'un PABX, et l'utilisateur du terminal doit pouvoir communiquer sans interruption avec un tiers en se déplacant dans l'immeuble. Des procédures de transfert de communication entre les stations fixes ou encore "handover" assurent cette continuité de communication.

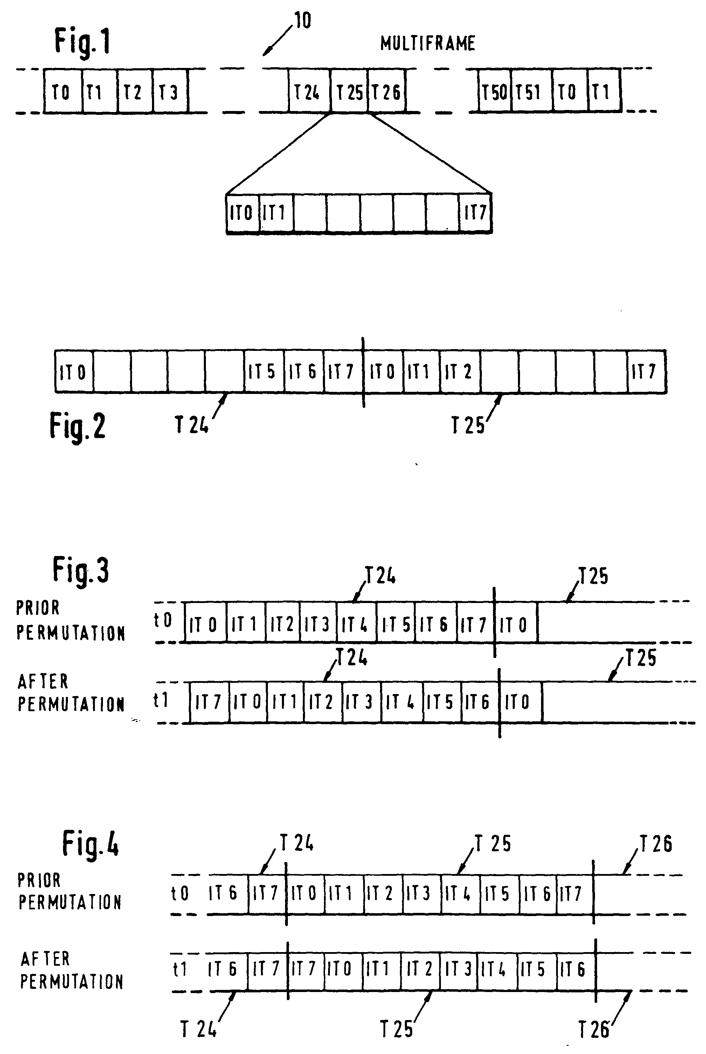

La figure 1 représente une multitrame transmise dans un tel réseau cellulaire.

La multitrame de la figure 1, généralement référencée par 10, comporte 52 trames consécutives, notées T0 à T51. Chaque trame comporte par exemple 8 intervalles de temps IT0 à IT7. Des temps de garde sont prévus entre les trames et, après la trame T51, une nouvelle multitrame se présente.

Les trames T0 à T24 et T26 à T50 sont des trames de trafic destinées à véhiculer uniquement des données de trafic entre les terminaux et une station fixe donnée. Cette communication de données de trafic s'effectue dans les sens montants et descendants, un terminal donné auquel un intervalle de temps est attribué pour la durée d'une communication recevant des données de trafic pendant un intervalle de temps et émettant des données de trafic pendant un autre intervalle de temps, ces intervalles de temps pouvant être ou non partie de la même trame.

Les trames T25 et T51 sont des trames de signalisation réservées à la réception, au niveau de chaque terminal, d'informations de signalisation diffusées par les différentes stations fixes du réseau. Ces informations de signalisation ont notamment pour but de permettre aux terminaux de décider s'il est nécessaire d'effectuer des procédures de handover, afin de poursuivre leurs communications en cours avec des stations fixes mieux recues. Cette décision peut par exemple s'effectuer sur la base d'un critère de puissance recue de ces informations de signalisation. A chaque station fixe du réseau est donc attribué, pour la durée de la communication du terminal, un intervalle de temps dans les trames T25 et T51. Les stations fixes sont synchronisées entre elles et chaque terminal en cours de communication se doit de recevoir toutes les informations de signalisation transmises par les différentes stations fixes.

La figure 2 représente plus en détail les trames T24 et T25 de la multitrame de la figure 1.

Comme indiqué précédemment, les intervalles de temps IT0 à IT7 de la trame de trafic T24 véhiculent des données de trafic, dans le sens montant et/ou descendant, et la trame de signalisation T25 est réservée à la réception d'informations de signalisation transmises par les différentes stations fixes du réseau cellulaire. Ces informations de signalisation sont de préférence, pour des raisons de simplicité, transmises sur une même fréquence.

Le problème d'un réseau de communication de ce type est que les terminaux doivent non seulement pouvoir émettre et recevoir des données de trafic dans les intervalles de temps qui leur sont alloués, mais également pouvoir recevoir, si ce n'est toutes les multitrames au moins de temps en temps, les données de signalisation diffusées par les stations fixes, afin de pouvoir requérir les procédures de handover. Or ceci requiert des oscillateurs locaux au niveau des terminaux qui puissent rapidement changer de fréquence. A titre d'exemple, le terminal à qui a éte alloué l'intervalle de temps IT7 doit pouvoir, en une durée correspondant au temps de garde prévu entre les trames, changer sa fréquence d'émission ou de réception pour correctement pouvoir recevoir les informations de signalisation véhiculées dans l'intervalle de temps IT0 de la trame T25. Ce problème apparaît en fait dès lors que l'oscillateur local n'est pas suffisamment rapide pour passer de la fréquence d'émission ou de réception des données de trafic à la fréquence de réception des informations de signalisation. Dès lors, si le changement de fréquence devait durer plus d'un intervalle de temps (en considérant un temps de garde nul), on aurait le même problème au niveau du terminal à qui est alloué l'intervalle de temps IT6.

Le même problème se pose pour passer de la fréquence de réception des informations de signalisation dans la trame T25 à celles d'émission et/ou de réception des données de trafic dans la trame T26. Des oscillateurs locaux capables de changer aussi rapidement de fréquence (en des temps inférieurs à 777 microsecondes) n'existent pas sur le marché ou alors leur coût devient prohibitif.

Si un terminal n'est pas apte à recevoir les informations de signalisation transmises par toutes les stations fixes, il existe un risque qu'il demande à se connecter (procédure de handover) à une station fixe qui ne lui assurera pas la meilleure qualité de communication disponible ou alors qu'il demande cette procédure de handover alors qu'elle n'était pas nécessaire.

Une solution à ce problème serait d'utiliser deux oscillateurs locaux, l'un servant pour l'émission et/ou la réception des données de trafic, l'autre restant calé sur la fréquence à laquelle sont transmises les informations de signalisation, une commutation entre les deux oscillateurs locaux étant réalisée pendant le temps de garde précité ou pendant la durée pendant laquelle le terminal ne recoit ni n'émet. L'inconvénient de cette solution est qu'elle est coûteuse car chaque terminal doit être pourvu de deux oscillateurs locaux.

La présente invention a notamment pour objectif de remédier à ces inconvénients.

Plus précisément, un des objectifs de l'invention est de fournir un procédé permettant d'assurer qu'un terminal communiquant en mode TDMA avec une station fixe d'un tel réseau cellulaire puisse émettre ou recevoir des données de trafic tout en recevant dans une durée prédéterminée toutes les données de signalisation transmises par les stations fixes.

Cet objectif, ainsi que d'autres qui apparaîtront par la suite, est atteint grâce à un procédé de gestion destiné à permettre la réception d'informations de signalisation au niveau d'un terminal radio communiquant en mode TDMA avec une station fixe, les informations de signalisation étant transmises par des stations fixes dans des intervalles de temps d'une trame de signalisation suivant et/ou précédant des trames de trafic, les stations fixes étant synchronisées entre-elles, ce procédé consistant à changer la position des informations de signalisation par rapport à celle des données de trafic, émises ou recues par le terminal, de manière à ce que le terminal puisse émettre ou recevoir les données de trafic tout en recevant dans une durée prédéterminée toutes les informations de signalisation transmises par les stations fixes.

La durée prédéterminée dépend notamment du rang de l'intervalle de temps alloué au terminal et de la loi de changement de position employée.

Dans un mode de mise en oeuvre, le changement de la position des informations de signalisation par rapport à celle des données de trafic, émises ou recues par le terminal, consiste à affecter au terminal un autre intervalle de temps dans la trame de trafic.

Dans un autre mode de mise en oeuvre, le changement de la position des informations de signalisation par rapport à celle des données de trafic, émises ou recues par le terminal, consiste à changer les intervalles de temps alloués aux stations fixes pour la transmission des informations de signalisation.

D'autres caractéristiques et avantages de l'invention apparaîtront à la lecture de la description suivante de deux modes de mise préférentiels, donnés à titre illustratif et non limitatif, et des dessins annexés dans lesquels :
- la figure 1 représente une multitrame transmise dans un réseau cellulaire du type considéré ;
- la figure 2 représente plus en détail les trames T24 et T25 de la multitrame de la figure 1 ;
- la figure 3 représente une opération de permutation circulaire des intervalles de temps réservés aux données de trafic ;
- la figure 4 représente une opération de permutation circulaire des intervalles de temps réservés aux informations de signalisation.

Les figures 1 et 2 ont été décrites précédemment en référence à l'état de la technique.

Le principe de l'invention réside dans le fait que, pour permettre à chaque terminal en cours de communication de pouvoir recevoir les informations de signalisation transmises par les différentes stations fixes du réseau, on prévoit de changer la position des informations de signalisation par rapport aux données de trafic émises ou recues par chaque terminal. On entend par changement de position une modification de l'écart temporel existant entre deux intervalles de temps donnés des trames T24 et T25 de la figure 2 (et/ou T25 et T26 et/ou T50 et T51 et/ou T51 et TO). Cette modification a pour finalité d'augmenter à plus ou moins long terme ( dans la durée prédéterminée précitée) cet écart temporel, afin de laisser un temps suffisant à l'oscillateur local du terminal pour changer sa fréquence d'accord.

Dans un premier mode de mise en oeuvre, représenté sur la figure 3, le changement de la position des informations de signalisation par rapport aux données de trafic, émises ou recues par le terminal, consiste à affecter à ce terminal un autre intervalle de temps dans la trame de trafic.

A titre de premier exemple, l'affectation à un terminal d'un autre intervalle de temps peut consiste à effectuer une permutation circulaire des intervalles de temps affectés aux différents terminaux. La figure 3 représente cette opération de permutation circulaire.

Au temps t0, correspondant à une multitrame temporelle n, la trame T24 véhicule au maximum 8 données de trafic dans des intervalles de temps IT0 à IT7. Au temps t1⁻, correspondant à la multitrame suivante (ou à la demie-multitrame suivante, les trames T24 et T25 correspondant alors en fait aux trames T50 et T51), une permutation des intervalles de temps est à l'origine du fait que la communication placée en fin de trame, dans l'intervalle de temps IT7, est maintenant placée en début de trame, à la place de l'intervalle de temps IT0. Le terminal à qui cet intervalle de temps IT7 est alloué dispose maintenant non plus du seul temps de garde entre T24 et T25 pour changer sa fréquence d'accord afin de recevoir les informations de signalisation de la trame T25, mais de plus de 6 intervalles de temps. Il est ainsi assuré que ce terminal pourra "écouter" toutes les informations de signalisation de la trame T25. Au temps t2 suivant, le dernier intervalle de temps de la trame T24 sera IT5 et le premier IT6, et ainsi de suite.

A titre d'exemple, si une seule permutation circulaire est réalisée par multitrame et que chaque terminal a besoin de 4 intervalles de temps pour ajuster sa fréquence de réception, on est assuré que chaque terminal aura pu écouter 4 fois l'ensemble des informations de trafic transmises au bout de 8 permutations circulaires.

Cette opération d'affectation à un terminal d'un autre intervalle de temps peut également consister à inverser l'ordre des intervalles de temps (passage de la séquence IT0 - IT1 - ... - IT6 - IT7 à la séquence IT7 - IT6 - ... - IT1 - IT0) ou à prévoir tout autre arrangement de ces intervalles de temps permettant d'assurer en définitive que chaque terminal aura eu accès à l'ensemble des informations de signalisation. Il est par exemple possible d'utiliser une loi de saut pseudo-aléatoire.

Ces opérations correspondent en fait à des sauts d'intervalles de temps. De même que pour les fréquences utilisées pour la transmission des informations de signalisation, les fréquences utilisées dans une même trame pour la transmission des données de trafic sont préférentiellement identiques. Une loi de saut de fréquence peut être prévue pour changer à chaque trame les fréquences d'émission de ces données de trafic.

Dans un deuxième mode de mise en oeuvre, représenté sur la figure 4, le changement de la position des informations de signalisation par rapport aux données de trafic émises ou recues par le terminal consiste à changer les intervalles de temps alloués aux stations fixes pour la transmission des informations de signalisation.

Dans ce mode de mise en oeuvre, au lieu d'affecter au terminal un autre intervalle de temps dans la trame de trafic, ce sont les intervalles de temps alloués aux stations fixes pour la transmission des informations de signalisation qui sont changés. Dans cet exemple, comme précédemment, une permutation circulaire des intervalles de temps est réalisée entre les temps t0 et t1. Ceci permet d'assurer que tous les terminaux émettant ou recevant des donnés de trafic dans les trames T24 et T26 auront accès dans un délai déterminé à toutes les informations de signalisation.

Comme précédemment, d'autres modes de changement d'intervalles de temps peuvent être utilisés (inversion de l'ordre des intervalles de temps, utilisation d'un algorithme séquence pseudo-aléatoire,...).

## Revendications

1. Procédé de gestion destiné à permettre la réception d'informations de signalisation au niveau d'un terminal radio communiquant en mode TDMA avec une station fixe, lesdites informations de signalisation étant transmises par des stations fixes dans des intervalles de temps d'une trame de signalisation suivant et/ou précédant des trames de trafic, lesdites stations fixes étant synchronisées entre-elles,
caractérisé en ce qu'il consiste à changer la position desdites informations de signalisation par rapport à celle desdites données de trafic, émises ou recues par ledit terminal, de manière à ce que ledit terminal puisse émettre ou recevoir lesdites données de trafic tout en recevant dans une durée prédéterminée toutes lesdites informations de signalisation transmises par lesdites stations fixes.

2. Procédé selon la revendication 1, caractérisé en ce que ledit changement de la position desdites informations de signalisation par rapport à celle desdites données de trafic, émises ou recues par ledit terminal, consiste à affecter audit terminal un autre intervalle de temps dans ladite trame de trafic.

3. Procédé selon la revendication 1, caractérisé en ce que ledit changement de la position desdites informations de signalisation par rapport à celle desdites données de trafic, émises ou recues par ledit terminal, consiste à changer les intervalles de temps alloués auxdites stations fixes pour la transmission desdites informations de signalisation.
